# EUROPÄISCHE PATENTSCHRIFT

(11) **EP 4 157 684 B1**
(45) Veröffentlichungstag und Bekanntmachung des Hinweises auf die Patenterteilung: **06.11.2024**
(21) Anmeldenummer: 21730485.6
(22) Anmeldetag: 25.05.2021
(51) Int. Cl.: B60T 8/32, B60T 8/172, B60T 8/88

(54) **SENSORANORDNUNG FÜR EIN FAHRZEUG UND MEHRKREISIGES BREMSSYSTEM**
SENSOR ARRANGEMENT FOR A VEHICLE AND A BRAKE SYSTEM COMPRISING SEVERAL CIRCUITS
DISPOSITIF DE CAPTEURS POUR UN VÉHICULE ET UN SYSTÈME DE FREINAGE À PLUSIEURS CIRCUITS

(30) Priorität: 26.05.2020 DE 102020206567
(43) Veröffentlichungstag der Anmeldung: 05.04.2023
(73) Patentinhaber: Robert Bosch GmbH, 70442 Stuttgart (DE)
(72) Erfinder: SCHMIDT, Thomas, 74321 Bietigheim-Bissingen (DE); XIE, Fei, 74376 Gemmrigheim (DE); STOEHR, Bernd, 74343 Sachsenheim (DE); FREY, Sebastian, 74081 Heilbronn (DE)
(86) Internationale Anmeldenummer: PCT/EP2021/063863
(87) Internationale Veröffentlichungsnummer: WO 2021/239713

(56) Entgegenhaltungen:
- EP-A1- 2 340 975
- EP-A2- 1 227 007
- DE-A1- 10 028 094
- DE-A1- 102018 204 615

## Beschreibung

Die Erfindung betrifft eine Sensoranordnung für ein Fahrzeug, mit mindestens zwei Steuergeräten, welche jeweils mindestens eine Auswerte- und Steuereinheit umfassen, und mehreren Sensorelementen, welche jeweils einem bremsbaren Fahrzeugrad und einer der Auswerte- und Steuereinheiten der Steuergeräte zugeordnet und ausgeführt sind, mindestens eine physikalische Größe des zugeordneten Fahrzeugrads zu erfassen und als Ausgangssignal an die zugeordnete Auswerte- und Steuereinheit auszugeben. Die Steuergeräte sind jeweils ausgeführt, basierend auf den erfassten bewegungsabhängigen physikalische Größen der Fahrzeugräder mindestens eine Bremsfunktion des Fahrzeugs auszuführen. Gegenstand der Erfindung ist auch ein korrespondierendes mehrkreisiges Bremssystem mit einer solchen Sensoranordnung.

Für hochautomatisiertes bzw. autonomes Fahren und für teilautomatisierte bzw. teilautonome Fahrfunktionen werden typischerweise Redundanzen gefordert, damit die Verfügbarkeit von Sensoren und Funktionen auch in vielen Fehlerfällen gewährleistet ist. Daher kommt typischerweise ein Bremssystem mit einer primären und sekundären Stabilisierung des Fahrzeugs zum Einsatz. Konkret werden zum Bremsen typischerweise zwei unabhängige Bremsgeräte bzw. Bremsregelsysteme eingesetzt. Beide sollten idealerweise Drehzahlinformation von Drehzahlsensoren, welche jeweils einem Fahrzeugrad zugeordnet sind, mit einer hohen Verfügbarkeit bekommen. In heutigen Lösungen werden die Drehzahlsensoren direkt Punkt-zu-Punkt mit einem Primärsteuergerät verbunden. Bei einem Zwei-Box-Systemansatz, wie beispielsweise einem ESP-System als Primärsystem und einem elektromechanischen oder einem anderen elektrischen Bremskraftverstärker als Sekundärsystem bzw. einem integrierten Bremssystem (IPB) als Primärsystem und einem redundanten Bremssystem RBU (RBU: Redundant Brake Unit) als Sekundärsystem, werden die Sensorsignale der Drehzahlsensoren entweder durch das Primärsteuergerät zum Sekundärsteuergerät durchgeschleift, was einen Zusatzaufwand und Kosten erfordert und auch nicht alle Fehlerfälle abdeckt, oder die Drehzahlsensoren werden über eine Umschaltvorrichtung im Fehlerfall zwischen dem Primärsteuergerät und dem Sekundärsteuergerät umgeschaltet. Eine andere bekannte Lösung sieht acht Drehzahlsensoren vor, von denen jeweils vier mit dem Primärsteuergerät und jeweils vier mit dem Sekundärsteuergerät direkt verbunden sind. Durch diese Aufteilung werden an jedem Fahrzeugrad zwei Drehzahlsensoren verbaut, damit die Systeme redundant das Fahrzeug stabilisieren können. Dies bedeutet, dass in Summe acht Drehzahlsensoren pro Fahrzeug und die damit verbundenen doppelten Kosten für Sensoren und Verkabelung aufgewendet werden.

Aus der DE 10 2015 209 565 A1 sind ein Verfahren und eine Vorrichtung zum Betreiben eines Kraftfahrzeugs bekannt. Die Vorrichtung umfasst einen Eingang für jeweils einen externen Drehzahlsensor, eine erste Steuereinrichtung, eine zweite Steuereinrichtung mit einer Drehzahlerfassungseinrichtung für jeden Drehzahlsensor und eine Rechnereinrichtung, mittels der Raddrehzahlen ermittelbar sind. Hierbei sind Drehzahlsignale der Drehzahlerfassungseinrichtungen an die erste Steuereinrichtung und an Ausgänge der Vorrichtung zuführbar, wobei die Drehzahlerfassungsrichtungen voneinander funktional entkoppelt sind, und wobei die zweite Steuereinrichtung funktional von der ersten Steuereinrichtung und von der Rechnereinrichtung entkoppelt ist. Dadurch ist jeder einzelne Kanal eines Drehzahlerfassungssystems redundant und weckfähig ausgebildet. Im Falle, dass die Vorrichtung defekt ist, können Raddrehzahlen noch für andere, an die Ausgänge der Vorrichtung anschließbare Steuergeräte zur Verfügung stehen, beispielsweise zum Ansteuern eines sekundäres Bremssystems. Erreicht wird dies dadurch, dass die Drehzahlerfassungsrichtungen als eine Art Splitter fungieren, die die Drehzahlsignale an mehrere Nutzer verteilen.

Aus der DE 10 2015 110 965 A1 ist ein autonomes Fahrzeugsteuerungssubsystem bekannt, welches ein erstes und ein zweites Bremssteuermodul, welche kommunikativ und elektrisch miteinander verbunden sind, und eine Mehrzahl an Raddrehzahlsensoren umfasst. Hierbei ist eine erste Untermenge der Raddrehzahlsensoren einschließlich wenigstens eines ersten der Raddrehzahlsensoren kommunikativ mit dem ersten Bremssteuermodul und nicht mit dem zweiten Bremssteuermodul verbunden, und eine zweite Untermenge der Raddrehzahlsensoren einschließlich wenigstens eines zweiten der Raddrehzahlsensoren ist kommunikativ mit dem zweiten Bremssteuermodul und nicht mit dem ersten Bremssteuermodul verbunden. Während eines typischen Betriebs des Fahrzeugs und des autonomen Fahrzeugsteuerungssubsystem kommunizieren die Bremssteuermodule miteinander, um Raddrehzahldaten von verschiedenen Sensoren bereitzustellen, wodurch jedes der Bremssteuermodule Operationen zum Steuern von Bremsen des Fahrzeugs vornehmen kann. Tritt jedoch bei einem der Bremssteuermodule ein Fehler, z.B. ein Energieverlust, auf, verfügt das andere Fahrzeugsteuerungssubsystem wenigstens über einige Raddrehzahldaten, d.h. Raddrehzahldaten von wenigstens einem Raddrehzahlsensor.

Aus der DE 100 28 094 A1 ist eine Fahrzeugbremsanlage bekannt. Die Fahrzeugbremsanlage umfasst einen ersten und einen zweiten Bremskreis, welche jeweils eine fremdbetätigbare Druckquelle und mindestens eine Radbremse aufweisen, sowie eine Druckausgleichseinrichtung, mit welcher der erste und der zweite Bremskreis verbunden sind und die derart gestaltet ist, dass bei einer Fremdbetätigung der Radbremse ein Druckausgleich zwischen den Bremskreisen erfolgt.

Aus der EP 1 227 007 A2 ist ein ausfallsicheres System bekannt, das bei der integrierten Steuerung eines Fahrzeugs verwendet wird und eine Vielzahl von Aktuatoren zum Betätigen einer Vielzahl von Strukturelementen, die jeweils an dem Fahrzeug vorgesehen sind, eine Vielzahl von Sensoren zum Erfassen von Zustandsgrößen, die jeweils bei der Steuerung des Betriebs der Strukturelemente verwendet werden, eine Vielzahl von Strukturelementsteuerabschnitten zum Antreiben und Steuern der Aktuatoren auf der Grundlage der von den Sensoren erfassten Zustandsgrößen gemäß jeweils voreingestellten Steuerprogrammen umfasst. Den Strukturelementsteuerabschnitten werden jeweils voreingestellte Prioritätsgrade gegeben. Zudem umfasst das System einen Managersteuerabschnitt zum Speichern eines oder mehrerer Ersatzprogramme, die dazu ausgelegt sind, Funktionen von einem der Strukturelementsteuerabschnitte zu implementieren, die für die Fahrt des Fahrzeugs notwendig sind und eine Kommunikationsleitung, wobei Aktoren und Sensoren unter den Aktoren und Sensoren, die zum Fahren des Fahrzeugs notwendig sind, die Strukturelementsteuerabschnitte und der Managersteuerabschnitt mit der Kommunikationsleitung verbunden sind, um Kommunikationen zwischen ihnen zu implementieren.

Aus der EP 2 340 975 A1 ist eine Vorrichtung zur Steuerung des Fahrwegs eines Fahrzeugs bekannt. Die Fahrsteuervorrichtung für ein Fahrzeug umfasst Fahrzeugpositionserfassungsmittel zum Erfassen einer Position des Fahrzeugs, Kurveninformationserfassungsmittel zum Erfassen von Informationen über eine Kurve einer Straße, auf der das Fahrzeug fährt, Fahrzeuggeschwindigkeitserfassungsmittel zum Erfassen einer Geschwindigkeit des Fahrzeugs; und
Verzögerungssteuermittel zum Ausführen einer Verzögerungssteuerung, welche die Geschwindigkeit des Fahrzeugs verringert, wenn das Fahrzeug durch die Kurve fährt, auf der Grundlage der Position des Fahrzeugs, der Kurveninformationen und der Geschwindigkeit des Fahrzeugs. Zudem umfasst die Fahrsteuervorrichtung eine tatsächliche Kurvenfahrtzustandsgrößeerfassungseinrichtung zum Erfassen einer tatsächlichen Kurvenfahrtzustandsgröße, die einen tatsächlichen Kurvenfahrtzustand des Fahrzeugs repräsentiert; und eine erste Ausführungsbeurteilungseinrichtung zum Bestimmen auf der Grundlage der tatsächlichen Kurvenzustandsgröße, ob die Ausführung der Verzögerungssteuerung zugelassen oder verhindert werden soll. Des Weiteren umfasst die Fahrsteuerungsvorrichtung eine zweite Ausführungsbeurteilungseinrichtung, die sich von der ersten Ausführungsbeurteilungseinrichtung unterscheidet und die auf der Grundlage der tatsächlichen Kurvenzustandsgröße beurteilt, ob die Ausführung der Verzögerung Steuerung zuzulassen oder zu verbieten ist.

Aus der DE 10 2018 204 615 A1 ist eine Sensoranordnung mit einem Sensorelement und mindestens zwei Steuergeräten bekannt, welche jeweils eine Auswerte- und Steuereinheit und eine Energiequelle aufweisen. In einem ersten Steuergerät ist eine erste Auswerte- und Steuereinheit mit einer ersten Energiequelle und in einem zweiten Steuergerät ist eine zweite Auswerte- und Steuereinheit mit einer zweiten Energiequelle verbunden. Die mindestens zwei Steuergeräte und das Sensorelement sind über mindestens ein separates Verschaltungsmodul miteinander verschaltet. Das jeweilige Verschaltungsmodul verbindet einen ersten Anschluss des zugehörigen Sensorelements mit der ersten Energiequelle und/oder mit der zweiten Energiequelle, wobei ein zweiter Anschluss des Sensorelements mit Masse verbunden ist. Ein durch das Sensorelement fließender Sensorstrom ist zumindest mit Informationen über eine erfasste Messgröße moduliert, wobei die erste Auswerte und Steuereinheit und/oder die zweite Auswerte- und Steuereinheit den erfassten Sensorstrom auswerten. Das Verschaltungsmodul verbindet bei Ausfall der verbundenen Energiequelle jeweils den ersten Anschluss des Sensorelements mit der anderen Energiequelle.

### Offenbarung der Erfindung

Die Sensoranordnung für ein Fahrzeug mit den Merkmalen des unabhängigen Patentanspruchs 1 und das korrespondierende mehrkreisige Bremssystem haben jeweils den Vorteil, dass ein redundantes Sensorelementkonzept teilweise mit Standardsensorelementen, welche vorzugsweise als Drehzahlfühler ausgeführt sind, und mit Doppelsensoren, welcher jeweils zwei vorzugsweise als Drehzahlfühler ausgeführte Sensorelemente umfassen, und ohne Umschaltvorrichtung umgesetzt werden kann, bei welchem teilweise Kosten für doppelte Drehzahlfühler und Verkabelung eingespart werden können. Zudem können in den beiden Steuergeräten Schaltungsteile eingespart werden. Bei einer bevorzugten Ausführung der Sensoranordnung mit sechs Drehzahlfühlern und drei auf zwei Steuergeräte verteilte Auswerte- und Steuereinheiten ist im Fehlerfall in vorteilhafter Weise eine Übergabe bzw. Übernahme der Sensorelemente zwischen den beiden Steuergeräten ohne eine zusätzliche Umschaltvorrichtung und ohne Latenzzeit möglich, da beide Steuergeräte über die Ausgangssignale der sechs Drehzahlfühler gleichzeitig die erfasste mindestens eine physikalische Größe aller bremsbaren Fahrzeugräder empfangen und auswerten können.

Ausführungsformen der vorliegenden Erfindung stellen eine Sensoreinheit für ein Fahrzeug, mit mindestens zwei Steuergeräten, welche jeweils mindestens eine Auswerte- und Steuereinheit umfassen, und mehreren Sensorelementen zur Verfügung, welche jeweils einem bremsbaren Fahrzeugrad und einer der Auswerte- und Steuereinheiten der Steuergeräte zugeordnet und ausgeführt sind, mindestens eine physikalische Größe des zugeordneten Fahrzeugrads zu erfassen und als Ausgangssignal direkt an die zugeordnete Auswerte- und Steuereinheit auszugeben. Die Steuergeräte sind jeweils ausgeführt, basierend auf den erfassten bewegungsabhängigen physikalische Größen der Fahrzeugräder mindestens eine Bremsfunktion des Fahrzeugs auszuführen. Hierbei ist zumindest an den bremsbaren Fahrzeugrädern einer zweiten Fahrzeugachse jeweils ein Sensorelement angeordnet, deren Ausgangssignale an verschiedene Auswerte- und Steuereinheiten ausgegeben werden, welche in einem gemeinsamen Steuergerät angeordnet sind, wobei zumindest an den bremsbaren Fahrzeugrädern einer ersten Fahrzeugachse jeweils zwei Sensorelemente angeordnet sind, deren Ausgangssignale an Auswerte- und Steuereinheiten ausgegeben werden, welche in verschiedenen Steuergeräten angeordnet sind. Die der ersten Fahrzeugachse zugeordneten Auswerte- und Steuereinheiten sind ausgeführt, das empfangene Ausgangssignal jeweils an mindestens eine Auswerte- und Steuereinheit eines anderen Steuergeräts auszugeben, so dass die einzelnen Steuergeräte jeweils von allen bremsbaren Fahrzeugrädern die korrespondierende mindestens eine erfasste physikalische Größe empfangen. Ein erstes Steuergerät der mindestens zwei Steuergeräte umfasst eine erste Auswerte- und Steuereinheit. Ein zweites Steuergerät der mindestens zwei Steuergeräte umfasst eine zweite Auswerte- und Steuereinheit und eine dritte Auswerte- und Steuereinheit. Hierbei kann die erste Auswerte- und Steuereinheit den bremsbaren Fahrzeugrädern der zweiten Fahrzeugachse zugeordnet werden. Die zweite Auswerte- und Steuereinheit kann den bremsbaren Fahrzeugrädern der zweiten Fahrzeugachse und einem ersten bremsbaren Fahrzeugrad der ersten Fahrzeugachse zugeordnet werden. Die dritte Auswerte- und Steuereinheit kann einem zweiten bremsbaren Fahrzeugrad der ersten Fahrzeugachse zugeordnet werden.

Zudem wird ein mehrkreisiges Bremssystem, insbesondere für ein hochautomatisiertes oder autonomes Fahrzeug, mit mehreren Radbremsen, welche jeweils an einem Fahrzeugrad angeordnet sind, einer solchen Sensoranordnung, welche mindestens eine physikalische Größe der Fahrzeugräder erfasst, einem Primärsteuergerät, welches basierend auf der erfassten mindestens einen physikalische Größe der Fahrzeugräder mindestens eine Bremsfunktion des Fahrzeugs ausführt, und einem Sekundärsteuergerät vorgeschlagen, welches basierend auf der erfassten mindestens einen physikalische Größe der Fahrzeugräder mindestens eine Bremsfunktion des Fahrzeugs ausführt.

Unter dem Steuergerät bzw. dem Primärsteuergerät oder dem Sekundärsteuergerät kann vorliegend ein elektrisches Gerät verstanden werden, welches erfasste Sensorsignale verarbeitet bzw. auswertet. Hierzu kann das Steuergerät zumindest eine Auswerte- und Steuereinheit zum Empfangen und Aufbereiten bzw. Verarbeiten von elektrischen Ausgangssignalen, mindestens eine Recheneinheit zum Auswerten der aufbereiteten Ausgangssignale, zumindest eine Speichereinheit zum Speichern von Signalen oder Daten, zumindest eine Schnittstelle zu einem Sensorelement zum Einlesen von Ausgangssignalen oder zu einem Aktor zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Vorliegend sind die Aktoren beispielsweise als Magnetventile oder als Druckerzeuger ausgeführt, welche vom Steuergerät entsprechend angesteuert werden können. Die mindestens eine Schnittstelle kann hard- und/oder softwaremäßig ausgebildet sein. Bei einer hardwaremäßigen Ausbildung können die Schnittstellen beispielsweise Teil eines sogenannten Systemschaltkreises sein, der verschiedenste Funktionen des Steuergeräts beinhaltet. Ein solcher Systemschaltkreis ist vorzugsweise als anwendungsspezifische integrierte Schaltung (ASIC) ausgeführt. So kann beispielsweise die mindestens eine Auswerte- und Steuereinheit als ASIC ausgeführt werden. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Recheneinheit ausgeführt wird. Die beiden Steuergeräte können in Verbindung mit einer Primäraktuatorik bzw. mit einer Sekundäraktuatorik verschiedene Bremsfunktionen, wie beispielsweise ABS-, ESP-, ASR- und/oder Hillhold-Funktionen (ABS: Antiblockiersystem, ESP: Elektronisches Stabilitätsprogramm, ASR: Antriebsschlupfregelung) ausführen. Hierbei können die beiden Steuergeräte im Normalbetrieb verschiedene Bremsfunktionen ausführen. Bei einem Ausfall eines der beiden Steuergeräte kann vorgesehen werden, dass das andere Steuergerät die Bremsfunktionen des ausgefallenen Steuergeräts zumindest teilweise übernimmt, um eine entsprechende Rückfallebene auszubilden.

Unter der Primäraktuatorik bzw. Sekundäraktuatorik kann vorliegend eine hydraulische und/oder elektromechanische Baugruppe verstanden werden, über welche im Bremssystem für den Druckaufbau bzw. Druckabbau in den Radbremsen entsprechende Steuer- und/oder Regelvorgänge für eine ABS-Funktion (ABS: Antiblockiersystem) oder eine ASR-Funktion (ASR: Antriebsschlupfregelung) oder ein elektronisches Stabilitätsprogramm (ESP) oder für eine automatische Parkbremsfunktion durchgeführt werden können. Zur Durchführung der Steuer- und/oder Regelvorgänge umfasst die Primäraktuatorik bzw. die Sekundäraktuatorik mindestens einen Bremsdruckerzeuger und eine Hydraulikventileinheit mit Magnetventilen, welche aufgrund der gegensätzlich wirkenden Kräfte "Magnetkraft", "Federkraft" und "Hydraulikkraft" meist in eindeutigen Positionen gehalten werden können. Dementsprechend gibt es die Magnetventilarten "stromlos offen" und "stromlos geschlossen". Zudem werden auch bistabile Magnetventile eingesetzt, welche zwischen einem "stromlos offenen" und einem "stromlos geschlossenen" Zustand umgeschaltet werden können, wobei ein solches bistabiles Magnetventil dauerhaft bis zum nächsten Umschaltsignal im jeweiligen Betriebszustand verbleibt. Der Bremsdruckerzeuger ist insbesondere muskelkraft-, hilfskraft- und/oder fremdkraftbetätigbar. "Hilfskraft" bedeutet eine Betätigung mit Muskelkraft unterstützt durch einen Bremskraftverstärker. Zur Durchführung der Parkbremsfunktion kann an den Fahrzeugrädern von mindestens einer Fahrzeugachse, vorzugsweise der Hinterachse, jeweils ein elektro-mechanischer Aktuator angeordnet sein, welcher über korrespondierende Ansteuersignale aktiviert bzw. deaktiviert werden kann.

Unter einem Sensorelement kann vorliegend ein elektrisches Bauteil verstanden werden, welches im Bereich eines zugeordneten Fahrzeugrads eine physikalische Größe bzw. eine Änderung einer physikalischen Größe direkt oder indirekt erfasst und vorzugsweise in ein elektrisches Ausgangssignal umwandelt. Vorzugsweise kann ein solches Sensorelement als Drehzahlfühler ausgeführt werden, wobei eine korrespondierende Drehzahlinformation vorzugsweise durch das Abtasten eines magnetischen Encoders oder eines ferromagnetischen Zahnrads ermittelt werden kann. Der magnetische Encoder ist beispielsweise als Messwertgeberring mit mehreren gleichmäßig über seinen Umfang verteilt angeordneten Magnetelementen, insbesondere Permanentmagnete, ausgebildet, welche eine abwechselnde magnetische Orientierung aufweisen und ein Magnetpolpaar bilden. Mittels des Drehzahlsensors werden die Magnetfelder der Magnetelemente bei einer Rotation des Messwertgeberrings erfasst, wobei in Abhängigkeit des magnetischen Flusses des jeweiligen erfassten Magnetfelds einer Auswerte- und Steuereinheit ein Ausgabestrom mittels einer Stromschnittstelle zur weiteren Verwendung als Drehzahlinformation zur Verfügung gestellt wird. Die Drehzahlfühler können beispielsweise ein Hall-, GMR-, AMR- oder TMR-Sensorelement umfassen (GMR: Giant Magnetoresistance oder Riesenmagnetowiderstand, AMR: Anisotrope Magnetoresistance oder anisotroper Magnetowiderstand, TMR: Tunnel Magnetoresistance oder magnetischer Tunnelwiderstand). Hierbei kann der jeweilige Drehzahlfühler sein Ausgangssignal als Datenprotokoll, wie beispielsweise als AK-Protokoll oder I-Protokoll, über die Stromschnittstelle an die korrespondierende Auswerte- und Steuereinheit übertragen. Zur Ermittlung der Drehzahlinformationen erfassen die Drehzahlfühler beispielsweise Magnetpolpaarnulldurchgänge, wobei bei jedem Magnetpolpaarnulldurchgang, d.h. einem Vorzeichenwechsel der erfassten Magnetfeldstärke, ein sogenannter "Speed-Puls" erzeugt wird, welcher die eigentliche Drehzahlinformation repräsentiert. Das AK-Protokoll umfasst den "Speed-Puls" als Drehzahlinformation und mindestens eine zusätzliche Drehzahlinformation als Datenwort mit mehrere Protokollbits. Die Protokollbits definieren den Dateninhalt der mindestens einen zusätzlichen Drehzahlinformation. Die mindestens eine zusätzliche Drehzahlinformation betrifft beispielsweise eine Drehrichtungsinformation, eine Luftspaltinformation, eine Temperaturinformation, eine Druckinformation usw.

Unter der Auswerte- und Steuereinheit kann vorliegend eine elektrische Schaltung, vorzugsweise eine anwendungsspezifische integrierte Schaltung (ASIC), verstanden werden, welche Ausgangssignale von Sensorelementen empfängt und ausgibt oder aufbereitet bzw. verarbeitet und als aufbereitete Ausgangssignale ausgibt. So kann ein durch das jeweilige Sensorelement fließender Sensorstrom mit Informationen über eine erfasste Messgröße moduliert werden und an die zugeordnete Auswerte- und Steuereinheit übertragen und dort in ein Spannungssignal umgewandelt werden, welches die korrespondierende Messinformation repräsentiert. Zudem können die einzelnen Auswerte- und Steuereinheiten beispielsweise den die eigentliche Messinformation repräsentierenden "Speed-Puls" als Spannungssignal jeweils über eine Punkt-zu-Punkt-Verbindung der mindestens einen Auswerte- und Steuereinheit in einem anderen Steuergerät in Echtzeit zur Verfügung stellen. Die Auswerte- und Steuereinheit kann mehrere Schnittstellen aufweisen, welche als Teil der Auswerte- und Steuereinheit ausgeführt sind. Es ist jedoch auch möglich, dass die Schnittstellen eigene, integrierte Schaltkreise sind oder zumindest teilweise aus diskreten Bauelementen bestehen.

Durch die in den abhängigen Ansprüchen aufgeführten Maßnahmen und Weiterbildungen sind vorteilhafte Verbesserungen der im unabhängigen Patentanspruch 1 angegebenen Sensoranordnung für ein Fahrzeug möglich.

Besonders vorteilhaft ist, dass die Steuergeräte jeweils mindestens eine Recheneinheit umfassen können. Hierbei können die einzelnen Auswerte- und Steuereinheiten aufbereitete Ausgangssignale an die mindestens eine Recheneinheit des korrespondierenden Steuergeräts übertragen. Des Weiteren können die aufbereiteten Ausgangssignale zusätzliche Messinformationen, wie beispielsweise eine Drehrichtungsinformation, eine Luftspaltinformation, eine Temperaturinformation, eine Druckinformation usw., umfassen, und von den einzelnen Auswerte- und Steuereinheiten an die korrespondierende Recheneinheit übertragen werden. Die einzelnen Recheneinheiten können die aufbereiteten Ausgangssignale zur Ausführung der korrespondierenden mindestens einen Bremsfunktion des Fahrzeugs auswerten.

In vorteilhafter Ausgestaltung der Sensoranordnung kann die mindestens eine physikalische Größe eine bewegungsabhängige Messgröße und/oder eine andere Messgröße des korrespondierenden Fahrzeugrads repräsentieren. Die bewegungsabhängige Messgröße kann beispielsweise eine Drehzahl und/oder Drehgeschwindigkeit und/oder eine Drehrichtung repräsentieren. Die mindestens eine andere Messgröße des korrespondierenden Fahrzeugrads kann beispielsweise eine Temperatur und/oder einen Reifendruck repräsentieren.

In weiterer vorteilhafter Ausgestaltung der Sensoranordnung können die Recheneinheiten basierend auf den aufbereiteten Ausgangssignalen jeweils Messdaten der einzelnen Fahrzeugräder erzeugen und einem Datenbus zur Verteilung im Fahrzeug zur Verfügung stellen. Bei dem Datenbus kann es sich beispielsweise um ein CAN-Bussystem oder ein Ethernet oder um ein Flexray handeln. Selbstverständlich können auch andere geeignete Netzwerke oder eine Kombination der genannten Netzwerke im Fahrzeug zur Verteilung der Messdaten eingesetzt werden.

In weiterer vorteilhafter Ausgestaltung der Sensoranordnung können die beiden Sensorelemente an den bremsbaren Fahrzeugrädern der zweiten Fahrzeugachse jeweils zu einem Doppelsensor zusammengefasst werden. Die einzelnen Sensorelemente an den bremsbaren Fahrzeugrädern der ersten Fahrzeugachse können jeweils als Standarddrehzahlfühler ausgeführt werden. Durch die teilweise Ausführung der Sensorelemente als Standarddrehzahlfühler wird eine kostengünstige Implementierung der erfindungsgemäßen Sensoranordnung ermöglicht.

In weiterer vorteilhafter Ausgestaltung der Sensoranordnung können die dem ersten bremsbaren Fahrzeugrad der ersten Fahrzeugachse zugeordnete zweite Auswerte- und Steuereinheit und die dem zweiten bremsbaren Fahrzeugrad der ersten Fahrzeugachse zugeordnete dritte Auswerte- und Steuereinheit jeweils die empfangenen Ausgangssignale der zugeordneten Sensorelemente an die erste Auswerte- und Steuereinheit übertragen.

In weiterer vorteilhafter Ausgestaltung der Sensoranordnung können die Steuergeräte jeweils eine redundante Energieversorgung aufweisen. Dadurch können die Auswertung und Übertragung der Ausgangssignale und die zugehörigen Fahrzeugfunktionen auch bei Ausfall einer der Energieversorgungen durchgeführt werden.

In weiterer vorteilhafter Ausgestaltung der Sensoranordnung kann das erste Steuergerät als Primärsteuergerät ausgeführt sein und ein ESP-System oder ein ESP-System mit einer vakuumunabhängigen elektrohydraulischen Bremskraftverstärkung ansteuern. Das zweite Steuergerät kann als Sekundärsteuergerät ausgeführt sein und einen vakuumunabhängigen elektrohydraulischen Bremskraftverstärker oder eine redundante Bremseinheit ansteuern. Das mindestens eine weitere Steuergerät kann ein Antriebssteuergerät, welches ausgeführt ist, einen Inverter eines elektrischen Antriebs des Fahrzeugs anzusteuern, oder ein Zentralsteuergerät sein, welches ausgeführt ist, Bewegungstrajektorien zu berechnen.

Bei Ausführungsformen der Sensoranordnung und des mehrkreisigen Bremssystems mit einer solchen Sensoranordnung stehen im Fehlerfall bei einem Ausfall einer der Auswerte- und Steuereinheiten immer noch die Ausgangssignale und die aufbereiteten Ausgangssignale von mindestens drei Sensorelementen in beiden Steuergeräten zur Auswertung zur Verfügung. Im Detail stehen dem zweiten Steuergerät bei einem Ausfall der ersten Auswerte- und Steuereinheit immer noch die Ausgangssignale und die aufbereiteten Ausgangssignale von vier Sensorelementen an den vier bremsbaren Fahrzeugrädern zur Verfügung, während der Recheneinheit des ersten Steuergeräts keine aufbereiteten Ausgangssignale zur Verfügung stehen. Bei einem Ausfall der zweiten Auswerte- und Steuereinheit stehen dem ersten Steuergerät immer noch die Ausgangssignale und die aufbereiteten Ausgangssignale von drei Sensorelementen an drei bremsbaren Fahrzeugrädern zur Verfügung, während der Recheneinheit des zweiten Steuergeräts nur noch ein aufbereitetes Ausgangssignal zur Verfügung steht. Bei einem Ausfall der dritten Auswerte- und Steuereinheit stehen dem ersten Steuergerät immer noch die Ausgangssignale und die aufbereiteten Ausgangssignale von drei Sensorelementen an drei bremsbaren Fahrzeugrädern zur Verfügung, und der Recheneinheit des zweiten Steuergeräts stehen drei aufbereitete Ausgangssignale zur Verfügung. Bei einem Ausfall einer der Recheneinheiten in einem der Steuergeräte stehen die Ausgangssignale und die aufbereiteten Ausgangssignale von den vier bremsbaren Fahrzeugrädern immer noch im anderen der beiden Steuergeräte zur Auswertung zur Verfügung. Bei Ausfall eines der vier Sensorelemente an den Fahrzeugrädern der ersten Fahrzeugachse stehen die Ausgangssignale und die aufbereiteten Ausgangssignale von vier bremsbaren Fahrzeugrädern in einem der beiden Steuergeräten weiter zur Auswertung zur Verfügung, und im anderen Steuergerät stehen nur die Ausgangssignale und die aufbereiteten Ausgangssignale von drei bremsbaren Fahrzeugrädern zur Auswertung zur Verfügung. Bei Ausfall eines der beiden Sensorelemente an den Fahrzeugrädern der zweiten Fahrzeugachse stehen beiden Steuergeräten nur noch die Ausgangssignale und die aufbereiteten Ausgangssignale von drei bremsbaren Fahrzeugrädern zur Auswertung zur Verfügung.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

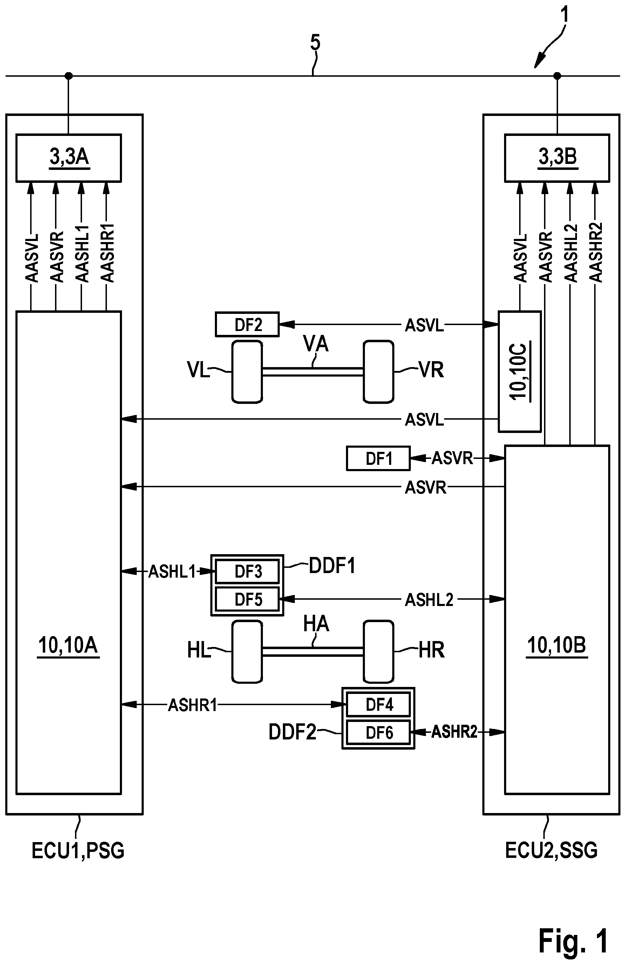

Fig. 1 zeigt eine schematisches Blockdiagramm eines Ausführungsbeispiels einer erfindungsgemäßen Sensoranordnung für ein Fahrzeug.

### Ausführungsformen der Erfindung

Wie aus Fig. 1 ersichtlich ist, umfasst das dargestellte Ausführungsbeispiel einer erfindungsgemäßen Sensoranordnung 1 für ein Fahrzeug mindestens zwei Steuergeräte ECU1, ECU2, welche jeweils mindestens eine Auswerte- und Steuereinheit 10, 10A, 10B, 10C umfassen, und mehrere Sensorelemente DF1, DF2, DF3, DF4, DF5, DF6, welche jeweils einem bremsbaren Fahrzeugrad VL, VR, HL, HR und einer der Auswerte- und Steuereinheiten 10A, 10B, 10C der Steuergeräte ECU1, ECU2 zugeordnet sind und mindestens eine physikalische Größe des zugeordneten Fahrzeugrads VL, VR, HL, HR erfassen und als Ausgangssignal ASVL, ASVR, ASHL1, ASHR1, ASHL2, ASHR2 direkt an die zugeordnete Auswerte- und Steuereinheit 10A, 10B, 10C ausgeben. Die Steuergeräte ECU1, ECU2 führen basierend auf den erfassten physikalischen Größen der bremsbaren Fahrzeugräder VL, VR, HL, HR mindestens eine Bremsfunktion des Fahrzeugs 1 aus. Hierbei ist zumindest an den bremsbaren Fahrzeugrädern VL, VR einer ersten Fahrzeugachse VA jeweils ein Sensorelement DF1, DF2 angeordnet, deren Ausgangssignale ASVL, ASVR an verschiedene Auswerte- und Steuereinheiten 10B, 10C ausgegeben werden, welche in einem gemeinsamen Steuergerät ECU2 angeordnet sind, wobei zumindest an den bremsbaren Fahrzeugrädern HL, HR einer zweiten Fahrzeugachse HA jeweils zwei Sensorelemente DF3, DF5; DF4, DF6 angeordnet sind, deren Ausgangssignale ASHL1, ASHL2, ASHR1, ASHR2 an Auswerte- und Steuereinheiten 10A, 10B ausgegeben werden, welche in verschiedenen Steuergeräten ECU1, ECU2 angeordnet sind. Die der ersten Fahrzeugachse VA zugeordneten Auswerte- und Steuereinheiten 10B, 10C geben das empfangene Ausgangssignal ASVL, ASVR jeweils an mindestens eine Auswerte- und Steuereinheit 10A eines anderen Steuergeräts ECU1 aus, so dass die einzelnen Steuergeräte ECU1, ECU2 jeweils von allen bremsbaren Fahrzeugrädern VL, VR, HL, HR die korrespondierende mindestens eine erfasste physikalische Größe empfangen.

Wie aus Fig. 1 weiter ersichtlich ist, sind die einzelnen Sensorelemente DF1, DF2 an den bremsbaren Fahrzeugrädern VL, VR der ersten Fahrzeugachse VA, hier der Vorderachse, jeweils als Standarddrehzahlfühler ausgeführt. Hierbei ist ein erstes Sensorelement DF1 einem ersten Fahrzeugrad VR der ersten Fahrzeugachse VA zugeordnet, und ein zweites Sensorelement DF2 ist einem zweiten Fahrzeugrad VL der ersten Fahrzeugachse VA zugeordnet. Die beiden Sensorelemente DF3, DF5; DF4, DF6 an den bremsbaren Fahrzeugrädern HL, HR der zweiten Fahrzeugachse HA sind jeweils zu einem Doppelsensor DDF1, DDF2 zusammengefasst. Hierbei sind die beiden Sensorelemente DF3, DF5 eines ersten Doppelsensors DDF1 einem ersten Fahrzeugrad HL einer zweiten Fahrzeugachse HA, hier der Hinterachse, zugeordnet. Die beiden Sensorelemente DF4, DF6 eines zweiten Doppelsensors DDF2 sind einem zweiten Fahrzeugrad HR der zweiten Fahrzeugachse HA zugeordnet.

Wie aus Fig. 1 weiter ersichtlich ist, umfasst ein erstes Steuergerät ECU1 im dargestellten Ausführungsbeispiel eine erste Auswerte- und Steuereinheit 10A, und ein zweites Steuergerät ECU2 umfasst eine zweite Auswerte- und Steuereinheit 10B und eine dritte Auswerte- und Steuereinheit 10C. Hierbei ist die erste Auswerte- und Steuereinheit 10A den bremsbaren Fahrzeugrädern HL, HR der zweiten Fahrzeugachse HA zugeordnet. Die zweite Auswerte- und Steuereinheit 10B ist den bremsbaren Fahrzeugrädern HL, HR der zweiten Fahrzeugachse HA und dem ersten bremsbaren Fahrzeugrad VR der ersten Fahrzeugachse VA zugeordnet. Die dritte Auswerte- und Steuereinheit 10C ist dem zweiten bremsbaren Fahrzeugrad VL der ersten Fahrzeugachse VA zugeordnet.

Wie aus Fig. 1 weiter ersichtlich ist, ist ein erstes Sensorelement DF3 des ersten Doppelsensors DDF1 der ersten Auswerte- und Steuereinheit 10A des ersten Steuergeräts ECU1 zugeordnet, und ein zweites Sensorelement DF5 des ersten Doppelsensors DDF1 ist der zweiten Auswerte- und Steuereinheit 10B des zweiten Steuergeräts ECU2 zugeordnet. Zudem ist ein erstes Sensorelement DF4 des zweiten Doppelsensors DDF2 der ersten Auswerte- und Steuereinheit 10A des ersten Steuergeräts ECU1 zugeordnet, und ein zweites Sensorelement DF6 des zweiten Doppelsensors DDF2 ist der zweiten Auswerte- und Steuereinheit 10B des zweiten Steuergeräts ECU2 zugeordnet. Des Weiteren ist das erste Sensorelement DF1 des ersten Fahrzeugrades VR der ersten Fahrzeugachse VA der zweiten Auswerte- und Steuereinheit 10B des zweiten Steuergeräts ECU2 zugeordnet und das zweite Sensorelement DF2 des zweiten Fahrzeugrades VL der ersten Fahrzeugachse VA ist der dritten Auswerte- und Steuereinheit 10C des zweiten Steuergeräts ECU2 zugeordnet. Die dem ersten bremsbaren Fahrzeugrad VR der ersten Fahrzeugachse VA zugeordnete zweite Auswerte- und Steuereinheit 10B und die dem zweiten bremsbaren Fahrzeugrad VL der ersten Fahrzeugachse VA zugeordnete dritte Auswerte- und Steuereinheit 10C übertragen jeweils die empfangenen Ausgangssignale ASVR, ASVL der zugeordneten Sensorelemente DF1, DF2 an die erste Auswerte- und Steuereinheit 10A. Somit empfängt die erste Auswerte- und Steuereinheit 10A des ersten Steuergeräts ECU1 die erfasste mindestens eine physikalische Größe des ersten Fahrzeugrads HL der zweiten Fahrzeugachse HA als Ausgangssignal ASHL1 des korrespondierenden ersten Sensorelements DF3 des ersten Doppelsensors DDF1 und die erfasste mindestens eine physikalische Größe des zweiten Fahrzeugrads HR der zweiten Fahrzeugachse HA als Ausgangssignal ASHR1 des korrespondierenden ersten Sensorelements DF4 des zweiten Doppelsensors DDF2 direkt. Zudem empfängt die erste Auswerte- und Steuereinheit 10A des ersten Steuergeräts ECU1 die erfasste mindestens eine physikalische Größe des ersten Fahrzeugrads VR der ersten Fahrzeugachse VA als Ausgangssignal ASVR des korrespondierenden ersten Sensorelements DF1 indirekt über die zweite Auswerte- und Steuereinheit 10B des zweiten Steuergeräts ECU2, und die erfasste mindestens eine physikalische Größe des zweiten Fahrzeugrads VL der ersten Fahrzeugachse VA als Ausgangssignal ASVL des korrespondierenden zweiten Sensorelements DF2 indirekt über die dritte Auswerte- und Steuereinheit 10C des zweiten Steuergeräts ECU2. Die zweite Auswerte- und Steuereinheit 10B des zweiten Steuergeräts ECU2 empfängt die erfasste mindestens eine physikalische Größe des ersten Fahrzeugrads HL der zweiten Fahrzeugachse HA als Ausgangssignal ASHL2 des korrespondierenden zweiten Sensorelements DF5 des ersten Doppelsensors DDF1 und die erfasste mindestens eine physikalische Größe des zweiten Fahrzeugrads HR der zweiten Fahrzeugachse HA als Ausgangssignal ASHR2 des korrespondierenden zweiten Sensorelements DF6 des zweiten Doppelsensors DDF2 sowie die erfasste mindestens eine physikalische Größe des ersten Fahrzeugrads VR der ersten Fahrzeugachse VA als Ausgangssignal ASVR des korrespondierenden ersten Sensorelements DF1 direkt. Die dritte Auswerte- und Steuereinheit 10C des zweiten Steuergeräts ECU2 empfängt die erfasste mindestens eine physikalische Größe des zweiten Fahrzeugrads VL der ersten Fahrzeugachse VA als Ausgangssignal ASVL des korrespondierenden zweiten Sensorelements DF2 direkt.

Wie aus Fig. 1 weiter ersichtlich ist, umfassen die beiden Steuergeräte ECU1, ECU2 im dargestellten Ausführungsbeispiel jeweils eine Recheneinheit 3, 3A, 3B, wobei das erste Steuergerät ECU1 eine erste Recheneinheit 3A und das zweite Steuergerät ECU2 eine zweite Recheneinheit 3B umfasst. Zudem weisen die beiden Steuergeräte ECU1, ECU2 jeweils eine nicht dargestellte redundante Energieversorgung auf.

Im dargestellten Ausführungsbeispiel bereitet die erste Auswerte- und Steuereinheit 10A des ersten Steuergeräts ECU1 die Ausgangssignale ASHL1, ASHL2, ASVR, ASVL des ersten Sensorelements DF3 des ersten Doppelsensors DDF1, des ersten Sensorelements DF5 des zweiten Doppelsensors DDF2, des ersten Sensorelements DF1 und des zweiten Sensorelements DF2 auf und gibt die aufbereiteten Ausgangssignale AASHL1, AASHL2, AASVR, AASVL an die erste Recheneinheit 3A des ersten Steuergeräts ECU1 aus. Die zweite Auswerte- und Steuereinheit 10B des zweiten Steuergeräts ECU2 bereitet die Ausgangssignale ASHL1, ASHL2, ASVR des zweiten Sensorelements DF5 des ersten Doppelsensors DDF1, des zweiten Sensorelements DF6 des zweiten Doppelsensors DDF2 und des ersten Sensorelements DF1 auf und gibt die aufbereiteten Ausgangssignale AASHL1, AASHL2, AASVR an die zweite Recheneinheit 3B des zweiten Steuergeräts ECU2 aus. Die dritte Auswerte- und Steuereinheit 10C des zweiten Steuergeräts ECU2 bereitet das Ausgangssignal ASVL des zweiten Sensorelements DF2 auf und gibt das aufbereitete Ausgangssignal AASVL an die zweite Recheneinheit 3B des zweiten Steuergeräts ECU2 aus. Die beiden Recheneinheiten 3A, 3B werten die aufbereiteten Ausgangssignale AASHL1, AASHL2, AASHR1, AASHR2, AASVR, AASVL zur Ausführung der korrespondierenden mindestens einen Bremsfunktion des Fahrzeugs aus. Im dargestellten Ausführungsbeispiel erzeugen die Recheneinheiten 3A, 3B basierend auf den aufbereiteten Ausgangssignalen AASVL, AASVR, AASHL1, AASHL2, AASHR1, AASHR2 jeweils Messdaten der einzelnen Fahrzeugräder VL, VR, HL, HR und stellen diese einem Datenbus 5 zur Verteilung im Fahrzeug zur Verfügung.

Selbstverständlich ist auch ein anderer als die dargestellte Zuordnung der einzelnen Sensorelemente DF1, DF2, DF3, DF4, DF5, DF6 möglich. So können beispielsweise die beiden Doppelsensoren DDF1, DDF2 den Fahrzeugrädern VR, VL der ersten Fahrzeugachse VA zugeordnet werden, und die Standardrehzahlfühler können den Fahrzeugrädern HR, HL der zweiten Fahrzeugachse HA zugeordnet werden. Des Weiteren können die Auswerte- und Steuereinheiten 10A, 10B, 10C die empfangenen Ausgangssignale ASVL, ASVR, ASHL1, ASHR1, ASHL2, ASHR2 der zugeordneten Sensorelemente DF1, DF2, DF3, DF4, DF5, DF6 bei einem alternativen nicht dargestellten Ausführungsbeispiel der Sensoranordnung 1 zusätzlich auch an mindestens ein weiteres nicht dargestelltes Steuergerät übertragen. Das mindestens eine weitere Steuergerät ist beispielsweise ein Antriebssteuergerät, welches ausgeführt ist, einen Inverter eines elektrischen Antriebs des Fahrzeugs 1 anzusteuern, oder ein Zentralsteuergerät, welches ausgeführt ist, Bewegungstrajektorien zu berechnen.

Die Sensorelemente DF1, DF2, DF3, DF4, DF5, DF6 erfassen jeweils mindestens eine physikalische Größe, welche eine bewegungsabhängige Messgröße und/oder eine andere Messgröße des korrespondierenden Fahrzeugrads VR, VL, HL, HR repräsentiert. Im dargestellten Ausführungsbeispiel repräsentiert die mindestens eine bewegungsabhängige Messgröße eine Drehzahl und eine Drehrichtung. Selbstverständlich kann die erfasste physikalische Größe auch eine andere bewegungsabhängige Messgröße, wie beispielsweise eine Drehgeschwindigkeit repräsentieren. Die mindestens eine andere Messgröße des korrespondierenden Fahrzeugrads VR, VL, HL, HR repräsentiert im dargestellten Ausführungsbeispiel eine Temperatur im Umfeld des Sensorelements DF1, DF2, DF3, DF4, DF5, DF6. Selbstverständlich kann die erfasste physikalische Größe auch eine andere Messgröße, wie beispielsweise einen Reifendruck oder eine Luftspaltinformation repräsentieren.

Das beschriebene Ausführungsbeispiel der erfindungsgemäßen Sensoranordnung 1 für ein Fahrzeug, welches mindestens eine physikalische Größe der Fahrzeugräder VR, VL, HL, HR erfasst, wird vorzugsweise in einem mehrkreisigen Bremssystem, insbesondere für ein hochautomatisiertes oder autonomes Fahrzeug eingesetzt. Ein solches mehrkreisiges Bremssystem umfasst mehrere nicht dargestellte Radbremsen, welche jeweils an einem Fahrzeugrad VR, VL, HL, HR angeordnet sind, ein Primärsteuergerät PSG, welches basierend auf der erfassten mindestens einen physikalische Größe der Fahrzeugräder VR, VL, HL, HR mindestens eine Bremsfunktion des Fahrzeugs ausführt, und ein Sekundärsteuergerät SSG, welches basierend auf der erfassten mindestens einen physikalische Größe der Fahrzeugräder VR, VL, HL, HR mindestens eine Bremsfunktion des Fahrzeugs ausführt. Hierbei ist das erste Steuergerät ECU1 als Primärsteuergerät PSG ausgeführt und das zweite Steuergerät ECU2 ist als Sekundärsteuergerät SSG ausgeführt.

Hierbei kann das Primärsteuergerät PSG ein ESP-System oder ein ESP-System mit einer vakuumunabhängigen elektrohydraulischen Bremskraftverstärkung oder ein integriertes Bremssystem (IPB) ansteuern. Das Sekundärsteuergerät SSG kann einen vakuumunabhängigen elektrohydraulischen Bremskraftverstärker oder eine redundante Bremseinheit ansteuern.

Das Primärsteuergerät PSG und das Sekundärsteuergerät SSG empfangen die Ausgangssignale ASVL, ASVR, ASHL1, ASHR1, ASHL2, ASHR2 der zugeordneten Sensorelemente DF1, DF2, DF3, DF4, DF5, DF6 in Echtzeit zur weiteren Auswertung und zur Ausführung der korrespondierenden Bremsfunktionen bzw. zur Ausführung der primären Stabilisierung des Fahrzeugs oder der sekundären Stabilisierung des Fahrzeugs im Notfall, wenn die primäre Stabilisierung ausgefallen ist. Zur Ausführung der korrespondierenden Bremsfunktionen und der primären Stabilisierung des Fahrzeugs steuert das Primärsteuergerät PSG eine entsprechende nicht näher dargestellte an sich bekannte Primäraktuatorik an, über welche im Bremssystem ein Druckaufbau bzw. Druckabbau in den Radbremsen durchgeführt und entsprechende Steuer- und/oder Regelvorgänge ausgeführt werden können. Zur Ausführung der korrespondierenden Bremsfunktionen und der sekundären Stabilisierung des Fahrzeugs steuert das Sekundärsteuergerät SSG eine entsprechende nicht näher dargestellte an sich bekannte Sekundäraktuatorik an, über welche im Bremssystem ein Druckaufbau bzw. Druckabbau in den Radbremsen durchgeführt und entsprechende Steuer- und/oder Regelvorgänge ausgeführt werden können. Zur Ausführung einer Parkbremsfunktion ist mindestens eines der beiden Steuergeräte ECU1, ECU2 über eine elektrische Verbindung mit einem korrespondierenden nicht näher dargestellten Aktuator einer elektrischen Parkbremse elektrisch verbunden. Vorzugsweise sind die Aktuatoren der Parkbremsfunktion an den Fahrzeugrädern HL, HR der zweite Fahrzeugachse HA bzw. der Hinterachse angeordnet. In einem alternativen nicht dargestellten Ausführungsbeispiel der Sensoranordnung 1 sind die Aktuatoren der elektrischen Parkbremse zusätzlich oder alternativ an den Fahrzeugrädern VR, VL der ersten Fahrzeugachse VA bzw. der Vorderachse angeordnet.

## Patentansprüche

1. Sensoranordnung (1) für ein Fahrzeug, mit mindestens zwei Steuergeräten (ECU1, ECU2), welche jeweils mindestens eine Auswerte- und Steuereinheit (10, 10A, 10B, 10C) umfassen, und mehreren Sensorelementen (DF1, DF2, DF3, DF4, DF5, DF6), welche jeweils einem bremsbaren Fahrzeugrad (VL, VR, HL, HR) und einer der Auswerte- und Steuereinheiten (10A, 10B, 10C) der Steuergeräte (ECU1, ECU2) zugeordnet und ausgeführt sind, mindestens eine physikalische Größe des zugeordneten Fahrzeugrads (VL, VR, HL, HR) zu erfassen und als Ausgangssignal (ASVL, ASVR, ASHL1, ASHR1, ASHL2, ASHR2) direkt an die zugeordnete Auswerte- und Steuereinheit (10A, 10B, 10C) auszugeben, wobei ein erstes Steuergerät (ECU1) der mindestens zwei Steuergeräte (ECU1, ECU2) eine erste Auswerte- und Steuereinheit (10A) umfasst und ein zweites Steuergerät (ECU2) der mindestens zwei Steuergeräte (ECU1, ECU2) eine zweite Auswerte- und Steuereinheit (10B) und eine dritte Auswerte- und Steuereinheit (10C) umfasst, wobei die Steuergeräte (ECU1, ECU2) jeweils ausgeführt sind, basierend auf den erfassten physikalische Größen der bremsbaren Fahrzeugräder (VL, VR, HL, HR) mindestens eine Bremsfunktion des Fahrzeugs (1) auszuführen, wobei zumindest an den bremsbaren Fahrzeugrädern (VL, VR) einer ersten Fahrzeugachse (VA) jeweils ein Sensorelement (DF1, DF2) angeordnet ist, deren Ausgangssignale (ASVL, ASVR) an verschiedene Auswerte- und Steuereinheiten (10B, 10C) ausgegeben werden, welche in einem gemeinsamen Steuergerät (ECU2) angeordnet sind, und wobei zumindest an den bremsbaren Fahrzeugrädern (VL, VR) einer zweiten Fahrzeugachse (HA) jeweils zwei Sensorelemente (DF3, DF5; DF4, DF6) angeordnet sind, deren Ausgangssignale (ASHL1, ASHL2, ASHR1, ASHR2) an Auswerte- und Steuereinheiten (10A, 10B) ausgegeben werden, welche in verschiedenen Steuergeräten (ECU1, ECU2) angeordnet sind, wobei die der ersten Fahrzeugachse (VA) zugeordneten Auswerte- und Steuereinheiten (10B, 10C) ausgeführt sind, das empfangene Ausgangssignal (ASVL, ASVR) jeweils an mindestens eine Auswerte- und Steuereinheit (10A) eines anderen Steuergeräts (ECU1) auszugeben, so dass die einzelnen Steuergeräte (ECU1, ECU2) jeweils von allen bremsbaren Fahrzeugrädern (VL, VR, HL, HR) die korrespondierende mindestens eine erfasste physikalische Größe empfangen.

2. Sensoranordnung (1) nach Anspruch 1, **dadurch gekennzeichnet, dass** die Steuergeräte (ECU1, ECU2) jeweils mindestens eine Recheneinheit (3, 3A, 3B) umfassen, wobei die einzelnen Auswerte- und Steuereinheiten (10A, 10B, 10C) weiter ausgeführt sind, aufbereitete Ausgangssignale (AASVL, AASVR, AASHL1, AASHL2, AASHR1, AASHR2) an die mindestens eine Recheneinheit (3, 3A, 3B) des korrespondierenden Steuergeräts (ECU1, ECU2) zu übertragen, und wobei die einzelnen Recheneinheiten (3A, 3B) ausgeführt sind, die aufbereiteten Ausgangssignale (AASVL, AASVR, AASHL1, AASHL2, AASHR1, AASHR2) zur Ausführung der korrespondierenden mindestens einen Bremsfunktion des Fahrzeugs auszuwerten.

3. Sensoranordnung (1) nach Anspruch 1 oder 2, **dadurch gekennzeichnet, dass** die mindestens eine physikalische Größe eine bewegungsabhängige Messgröße und/oder eine andere Messgröße des korrespondierenden Fahrzeugrads (VL, VR, HL, HR) repräsentiert.

4. Sensoranordnung (1) nach Anspruch 3, **dadurch gekennzeichnet, dass** die mindestens eine bewegungsabhängige Messgröße eine Drehzahl und/oder Drehgeschwindigkeit und/oder eine Drehrichtung repräsentiert.

5. Sensoranordnung (1) nach einem der Ansprüche 2 bis 4, **dadurch gekennzeichnet, dass** die Recheneinheiten (3, 3A, 3B) basierend auf den aufbereiteten Ausgangssignalen (AASVL, AASVR, AASHL1, AASHL2, AASHR1, AASHR2) jeweils Messdaten der einzelnen Fahrzeugräder (VL, VR, HL, HR) erzeugen und einem Datenbus (5) zur Verteilung im Fahrzeug zur Verfügung stellen.

6. Sensoranordnung (1) nach einem der Ansprüche 1 bis 5, **dadurch gekennzeichnet, dass** die beiden Sensorelemente (DF3, DF5; DF4, DF6) an den bremsbaren Fahrzeugrädern (HL, HR) der zweiten Fahrzeugachse (HA) jeweils zu einem Doppelsensor (DDF1, DDF2) zusammengefasst sind, und die einzelnen Sensorelemente (DF1, DF2) an den bremsbaren Fahrzeugrädern (VL, VR) der ersten Fahrzeugachse (VA) jeweils als Standarddrehzahlfühler ausgeführt sind.

7. Sensoranordnung (1) nach einem der Ansprüche 1 bis 6, **dadurch gekennzeichnet, dass** die erste Auswerte- und Steuereinheit (10A) den bremsbaren Fahrzeugrädern (HL, HR) der zweiten Fahrzeugachse (HA) zugeordnet ist, und die zweite Auswerte- und Steuereinheit (10B) den bremsbaren Fahrzeugrädern (HL, HR) der zweiten Fahrzeugachse (HA) und einem ersten bremsbaren Fahrzeugrad (VR) der ersten Fahrzeugachse (VA) zugeordnet ist, und die dritte Auswerte- und Steuereinheit (10C) einem zweiten bremsbaren Fahrzeugrad (VL) der ersten Fahrzeugachse (VA) zugeordnet ist.

8. Sensoranordnung (10) nach Anspruch 7, **dadurch gekennzeichnet, dass** die dem ersten bremsbaren Fahrzeugrad (VR) der ersten Fahrzeugachse (VA) zugeordnete zweite Auswerte- und Steuereinheit (10B) und die dem zweiten bremsbaren Fahrzeugrad (VL) der ersten Fahrzeugachse (VA) zugeordnete dritte Auswerte- und Steuereinheit (10C) jeweils die empfangenen Ausgangssignale (ASVR, ASVL) der zugeordneten Sensorelemente (DF1, DF2) an die erste Auswerte- und Steuereinheit (10A) übertragen.

9. Sensoranordnung (1) nach einem der Ansprüche 1 bis 8, **dadurch gekennzeichnet, dass** die Auswerte- und Steuereinheiten (10A, 10B, 10C) der beiden Steuergeräte (ECU1, ECU2) die empfangenen Ausgangssignale (ASVL, ASVR, ASHL1, ASHR1, ASHL2, ASHR2) der zugeordneten Sensorelemente (DF1, DF2, DF3, DF4, DF5, DF6) jeweils an mindestens ein weiteres Steuergerät übertragen.

10. Sensoranordnung (1) nach einem der Ansprüche 1 bis 9, **dadurch gekennzeichnet, dass** die Steuergeräte (ECU1, ECU2) jeweils eine redundante Energieversorgung aufweisen.

11. Sensoranordnung (1) nach einem der Ansprüche 1 bis 10, **dadurch gekennzeichnet, dass** das erste Steuergerät (ECU1) als Primärsteuergerät (PSG) ausgeführt ist und ein ESP-System oder ein ESP-System mit einer vakuumunabhängigen elektrohydraulischen Bremskraftverstärkung ansteuert.

12. Sensoranordnung (1) nach einem der Ansprüche 1 bis 11, **dadurch gekennzeichnet, dass** das zweite Steuergerät (ECU2) als Sekundärsteuergerät (SSG) ausgeführt ist und einen vakuumunabhängigen elektrohydraulischen Bremskraftverstärker oder eine redundante Bremseinheit ansteuert.

13. Sensoranordnung (1) nach einem der Ansprüche 9 bis 12, **dadurch gekennzeichnet, dass** das mindestens eine weitere Steuergerät ein Antriebssteuergerät ist, welches ausgeführt ist, einen Inverter eines elektrischen Antriebs des Fahrzeugs (1) anzusteuern, oder ein Zentralsteuergerät ist, welches ausgeführt ist, Bewegungstrajektorien zu berechnen.

14. Mehrkreisiges Bremssystem, insbesondere für ein hochautomatisiertes oder autonomes Fahrzeug, mit mehreren Radbremsen, welche jeweils an einem Fahrzeugrad (VL, VR, HL, HR) angeordnet sind, einer Sensoranordnung (1), welche mindestens eine physikalische Größe der Fahrzeugräder (VL, VR, HL, HR) erfasst, einem Primärsteuergerät (PSG), welches basierend auf der erfassten mindestens einen physikalische Größe der Fahrzeugräder (VL, VR, HL, HR) mindestens eine Bremsfunktion des Fahrzeugs ausführt, und einem Sekundärsteuergerät (SSG), welches basierend auf der erfassten mindestens einen physikalische Größe der Fahrzeugräder (VL, VR, HL, HR) mindestens eine Bremsfunktion des Fahrzeugs ausführt, **dadurch gekennzeichnet, dass** die Sensoranordnung (1) nach einem der Ansprüche 1 bis 13 ausgeführt ist.

## Claims

1. Sensor arrangement (1) for a vehicle, having at least two control units (ECU1, ECU2), each comprising at least one evaluation and control unit (10, 10A, 10B, 10C), and a plurality of sensor elements (DF1, DF2, DF3, DF4, DF5, DF6), which are each assigned to a brakeable vehicle wheel (VL, VR, HL, HR) and one of the evaluation and control units (10A, 10B, 10C) of the control units (ECU1, ECU2) and are designed to capture at least one physical variable of the assigned vehicle wheel (VL, VR, HL, HR) and to output it directly to the assigned evaluation and control unit (10A, 10B, 10C) as an output signal (ASVL, ASVR, ASHL1, ASHR1, ASHL2, ASHR2), wherein a first control unit (ECU1) of the at least two control units (ECU1, ECU2) comprises a first evaluation and control unit (10A) and a second control unit (ECU2) of the at least two control units (ECU1, ECU2) comprises a second evaluation and control unit (10B) and a third evaluation and control unit (10C), wherein the control units (ECU1, ECU2) are each designed to perform at least one braking function of the vehicle (1) based on the captured physical variables of the brakeable vehicle wheels (VL, VR, HL, HR), wherein a sensor element (DF1, DF2) is arranged at least on each of the brakeable vehicle wheels (VL, VR) of a first vehicle axle (VA), the output signals (ASVL, ASVR) from which sensor elements are output to different evaluation and control units (10B, 10C) which are arranged in a common control unit (ECU2), and wherein two sensor elements (DF3, DF5; DF4, DF6) are arranged at least on each of the brakeable vehicle wheels (VL, VR) of a second vehicle axle (HA), the output signals (ASHL1, ASHL2, ASHR1, ASHR2) from which sensor elements are output to evaluation and control units (10A, 10B) which are arranged in different control units (ECU1, ECU2), wherein the evaluation and control units (10B, 10C) assigned to the first vehicle axle (VA) are designed to respectively output the received output signal (ASVL, ASVR) to at least one evaluation and control unit (10A) of another control unit (ECU1), with the result that the individual control units (ECU1, ECU2) respectively receive the corresponding at least one captured physical variable from all brakeable vehicle wheels (VL, VR, HL, HR).

2. Sensor arrangement (1) according to Claim 1, **characterized in that** the control units (ECU1, ECU2) each comprise at least one computing unit (3, 3A, 3B), wherein the individual evaluation and control units (10A, 10B, 10C) are further designed to transmit processed output signals (AASVL, AASVR, AASHL1, AASHL2, AASHR1, AASHR2) to the at least one computing unit (3, 3A, 3B) of the corresponding control unit (ECU1, ECU2), and wherein the individual computing units (3A, 3B) are designed to evaluate the processed output signals (AASVL, AASVR, AASHL1, AASHL2, AASHR1, AASHR2) in order to perform the corresponding at least one braking function of the vehicle.

3. Sensor arrangement (1) according to Claim 1 or 2, **characterized in that** the at least one physical variable represents a motion-dependent measurement variable and/or another measurement variable of the corresponding vehicle wheel (VL, VR, HL, HR).

4. Sensor arrangement (1) according to Claim 3, **characterized in that** the at least one motion-dependent measurement variable represents a speed and/or rotational speed and/or a direction of rotation.

5. Sensor arrangement (1) according to one of Claims 2 to 4, **characterized in that** the computing units (3, 3A, 3B) each generate measurement data relating to the individual vehicle wheels (VL, VR, HL, HR) based on the processed output signals (AASVL, AASVR, AASHL1, AASHL2, AASHR1, AASHR2) and make said data available to a data bus (5) for distribution in the vehicle.

6. Sensor arrangement (1) according to one of Claims 1 to 5, **characterized in that** the two sensor elements (DF3, DF5; DF4, DF6) on the brakeable vehicle wheels (HL, HR) of the second vehicle axle (HA) are each combined to form a double sensor (DDF1, DDF2), and the individual sensor elements (DF1, DF2) on the brakeable vehicle wheels (VL, VR) of the first vehicle axle (VA) are each designed as a standard speed sensor.

7. Sensor arrangement (1) according to one of Claims 1 to 6, **characterized in that** the first evaluation and control unit (10A) is assigned to the brakeable vehicle wheels (HL, HR) of the second vehicle axle (HA), and the second evaluation and control unit (10B) is assigned to the brakeable vehicle wheels (HL, HR) of the second vehicle axle (HA) and a first brakeable vehicle wheel (VR) of the first vehicle axle (VA), and the third evaluation and control unit (10C) is assigned to a second brakeable vehicle wheel (VL) of the first vehicle axle (VA).

8. Sensor arrangement (10) according to Claim 7, **characterized in that** the second evaluation and control unit (10B) assigned to the first brakeable vehicle wheel (VR) of the first vehicle axle (VA) and the third evaluation and control unit (10C) assigned to the second brakeable vehicle wheel (VL) of the first vehicle axle (VA) each transmit the received output signals (ASVR, ASVL) from the assigned sensor elements (DF1, DF2) to the first evaluation and control unit (10A).

9. Sensor arrangement (1) according to one of Claims 1 to 8, **characterized in that** the evaluation and control units (10A, 10B, 10C) of the two control units (ECU1, ECU2) each transmit the received output signals (ASVL, ASVR, ASHL1, ASHR1, ASHL2, ASHR2) from the assigned sensor elements (DF1, DF2, DF3, DF4, DF5, DF6) to at least one further control unit.

10. Sensor arrangement (1) according to one of Claims 1 to 9, **characterized in that** the control units (ECU1, ECU2) each have a redundant energy supply.

11. Sensor arrangement (1) according to one of Claims 1 to 10, **characterized in that** the first control unit (ECU1) is designed as a primary control unit (PSG) and controls an ESP system or an ESP system with a vacuum-independent electro-hydraulic brake boost.

12. Sensor arrangement (1) according to one of Claims 1 to 11, **characterized in that** the second control unit (ECU2) is designed as a secondary control unit (SSG) and controls a vacuum-independent electro-hydraulic brake booster or a redundant brake unit.

13. Sensor arrangement (1) according to one of Claims 9 to 12, **characterized in that** the at least one further control unit is a drive control unit which is designed to control an inverter of an electric drive of the vehicle (1), or is a central control unit which is designed to calculate motion trajectories.

14. Multi-circuit braking system, in particular for a highly automated or autonomous vehicle, having a plurality of wheel brakes each arranged on a vehicle wheel (VL, VR, HL, HR), a sensor arrangement (1) which captures at least one physical variable of the vehicle wheels (VL, VR, HL, HR), a primary control unit (PSG) which performs at least one braking function of the vehicle based on the captured at least one physical variable of the vehicle wheels (VL, VR, HL, HR), and a secondary control unit (SSG) which performs at least one braking function of the vehicle based on the captured at least one physical variable of the vehicle wheels (VL, VR, HL, HR), **characterized in that** the sensor arrangement (1) is designed according to one of Claims 1 to 13.

## Revendications

1. Ensemble capteur (1) pour un véhicule, comprenant au moins deux appareils de commande (ECU1, ECU2) qui comprennent respectivement au moins une unité d'évaluation et de commande (10, 10A, 10B, 10C), et de multiples éléments capteurs (DF1, DF2, DF3, DF4, DF5, DF6) qui sont respectivement associés à une roue de véhicule (VL, VR, HL, HR) pouvant être freinée et à l'une des unités d'évaluation et de commande (10A, 10B, 10C) des appareils de commande (ECU1, ECU2) et conçus pour détecter au moins une grandeur physique de la roue de véhicule (VL, VR, HL, HR) associée et pour la délivrer en tant que signal de sortie (ASVL, ASVR, ASHL1, ASHR1, ASHL2, ASHR2) directement à l'unité d'évaluation et de commande (10A, 10B, 10C) associée, un premier appareil de commande (ECU1) des au moins deux appareils de commande (ECU1, ECU2) comprenant une première unité d'évaluation et de commande (10A) et un deuxième appareil de commande (ECU2) des au moins deux appareils de commande (ECU1, ECU2) comprenant une deuxième unité d'évaluation et de commande (10B) et une troisième unité d'évaluation et de commande (10C), les appareils de commande (ECU1, ECU2) étant respectivement conçus pour exécuter au moins une fonction de freinage du véhicule (1) sur la base des grandeurs physiques détectées des roues de véhicule pouvant être freinées (VL, VR, HL, HR), un élément capteur (DF1, DF2) respectif étant disposé au moins sur les roues de véhicule pouvant être freinées (VL, VR) d'un premier essieu de véhicule (VA), ses signaux de sortie (ASVL, ASVR) étant délivrés à différentes unités d'évaluation et de commande (10B, 10C) qui sont disposées dans un appareil de commande (ECU2) commun, et deux éléments capteurs respectifs (DF3, DF5 ; DF4, DF6) étant disposés au moins sur les roues de véhicule pouvant être freinées (VL, VR) d'un deuxième essieu de véhicule (HA), ses signaux de sortie (ASHL1, ASHL2, ASHR1, ASHR2) étant délivrés à des unités d'évaluation et de commande (10A, 10B) qui sont disposées dans différents appareils de commande (ECU1, ECU2), les unités d'évaluation et de commande (10B, 10C) associées au premier essieu de véhicule (VA) étant conçues pour délivrer le signal de sortie reçu respectif (ASVL, ASVR) à au moins une unité d'évaluation et de commande (10A) d'un autre appareil de commande (ECU1), de telle sorte que les appareils de commande (ECU1, ECU2) individuels reçoivent respectivement ladite au moins une grandeur physique détectée correspondante en provenance de toutes les roues de véhicule pouvant être freinées (VL, VR, HL, HR).

2. Ensemble capteur (1) selon la revendication 1, **caractérisé en ce que** les appareils de commande (ECU1, ECU2) comprennent respectivement au moins une unité de calcul (3, 3A, 3B), les unités d'évaluation et de commande (10A, 10B, 10C) individuelles étant en outre conçues pour transmettre des signaux de sortie traités (AASVL, AASVR, AASHL1, AASHL2, AASHR1, AASHR2) à ladite au moins une unité de calcul (3, 3A, 3B) de l'appareil de commande (ECU1, ECU2) correspondant, et les unités de calcul (3A, 3B) étant conçues pour évaluer les signaux de sortie traités (AASVL, AASVR, AASHL1, AASHL2, AASHR1, AASHR2) pour exécuter ladite au moins une fonction de freinage correspondante du véhicule.

3. Ensemble capteur (1) selon la revendication 1 ou 2, **caractérisé en ce que** ladite au moins une grandeur physique représente une grandeur de mesure dépendant du mouvement et/ou une autre grandeur de mesure de la roue de véhicule (VL, VR, HL, HR) correspondante.

4. Ensemble capteur (1) selon la revendication 3, **caractérisé en ce que** ladite au moins une grandeur de mesure dépendant du mouvement représente un nombre de tours et/ou une vitesse de rotation et/ou une direction de rotation.

5. Ensemble capteur (1) selon l'une des revendications 2 à 4, **caractérisé en ce que** les unités de calcul (3, 3A, 3B) génèrent respectivement, sur la base des signaux de sortie traités (AASVL, AASVR, AASHL1, AASHL2, AASHR1, AASHR2), des données de mesure des roues de véhicule (VL, VR, HL, HR) individuelles et les fournissent à un bus de données (5) pour les distribuer dans le véhicule.

6. Ensemble capteur (1) selon l'une des revendications 1 à 5, **caractérisé en ce que** les deux éléments capteurs (DF3, DF5 ; DF4, DF6) sont respectivement regroupés en un double capteur (DDF1, DDF2) sur les roues de véhicule pouvant être freinées (HL, HR) du deuxième essieu de véhicule (HA), et **en ce que** les éléments capteurs individuels (DF1, DF2) sont respectivement conçus sous forme de capteurs de vitesse de rotation standard sur les roues de véhicule pouvant être freinées (VL, VR) du premier essieu de véhicule (VA).

7. Ensemble capteur (1) selon l'une des revendications 1 à 6, **caractérisé en ce que** la première unité d'évaluation et de commande (10A) est associée aux roues de véhicule pouvant être freinées (HL, HR) du deuxième essieu de véhicule (HA), et **en ce que** la deuxième unité d'évaluation et de commande (10B) est associée aux roues de véhicule pouvant être freinées (HL, HR) du deuxième essieu de véhicule (HA) et est associée à une première roue de véhicule pouvant être freinée (VR) du premier essieu de véhicule (VA), et **en ce que** la troisième unité d'évaluation et de commande (10C) est associée à une deuxième roue de véhicule pouvant être freinée (VL) du premier essieu de véhicule (VA).

8. Ensemble capteur (10) selon la revendication 7, **caractérisé en ce que** la deuxième unité d'évaluation et de commande (10B) associée à la première roue de véhicule pouvant être freinée (VR) du premier essieu de véhicule (VA) et la troisième unité d'évaluation et de commande (10C) associée à la deuxième roue de véhicule pouvant être freinée (VL) du premier essieu de véhicule (VA) transmettent respectivement à la première unité d'évaluation et de commande (10A) les signaux de sortie reçus (ASVR, ASVL) des éléments capteurs (DF1, DF2) associés.

9. Ensemble capteur (1) selon l'une des revendications 1 à 8, **caractérisé en ce que** les unités d'évaluation et de commande (10A, 10B, 10C) des deux appareils de commande (ECU1, ECU2) transmettent respectivement à au moins un autre appareil de commande les signaux de sortie reçus (ASVL, ASVR, ASHL1, ASHR1, ASHL2, ASHR2) des éléments capteurs (DF1, DF2, DF3, DF4, DF5, DF6) associés.

10. Ensemble capteur (1) selon l'une des revendications 1 à 9, **caractérisé en ce que** les appareils de commande (ECU1, ECU2) comportent respectivement une alimentation en énergie redondante.

11. Ensemble capteur (1) selon l'une des revendications 1 à 10, **caractérisé en ce que** le premier appareil de commande (ECU1) est conçu sous la forme d'un appareil de commande primaire (PSG) et commande un système ESP ou un système ESP doté d'un servofrein électrohydraulique indépendant du vide.

12. Ensemble capteur (1) selon l'une des revendications 1 à 11, **caractérisé en ce que** le deuxième appareil de commande (ECU2) est conçu sous la forme d'un appareil de commande secondaire (SSG) et commande un servofrein électrohydraulique indépendant du vide ou une unité de freinage redondante.

13. Ensemble capteur (1) selon l'une des revendications 9 à 12, **caractérisé en ce que** ledit au moins un autre appareil de commande est un appareil de commande d'entraînement qui est conçu pour commander un inverseur d'un entraînement électrique du véhicule (1), ou est un appareil de commande central qui est conçu pour calculer des trajectoires de déplacement.

14. Système de freinage à plusieurs circuits, notamment destiné à un véhicule hautement automatisé ou autonome, comprenant de multiples freins de roue, qui sont respectivement disposés sur une roue de véhicule (VL, VR, HL, HR), un ensemble capteur (1) qui détecte au moins une grandeur physique des roues de véhicule (VL, VR, HL, HR), un appareil de commande primaire (PSG) qui exécute au moins une fonction de freinage du véhicule sur la base de ladite au moins une grandeur physique détectée des roues de véhicule (VL, VR, HL, HR), et un appareil de commande secondaire (SSG) qui exécute au moins une fonction de freinage du véhicule sur la base de ladite au moins une grandeur physique détectée des roues de véhicule (VL, VR, HL, HR), **caractérisé en ce que** l'ensemble capteur (1) est réalisé selon l'une des revendications 1 à 13.
